# EUROPEAN PATENT APPLICATION

(11) **EP 4 203 363 A1**
(43) Date of publication of application: **28.06.2023**
(21) Application number: 21862003.7
(22) Date of filing: 23.08.2021
(51) Int. Cl.: H04L 1/18, H04L 1/00, H04L 5/00, H04W 28/26, H04W 72/12, H04W 92/18

(54) **METHOD AND DEVICE FOR RETRANSMISSION IN SIDELINK COMMUNICATION**

(30) Priority: 24.08.2020 US 202063069284 P
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HAHN, Gene Back, Hwaseong-si, Gyeonggi-do 18280 (KR); JUNG, In Yong, Hwaseong-si, Gyeonggi-do 18280 (KR); SON, Hyuk Min, Iksan-si, Jeollabuk-do 54653 (KR)
(74) Representative: Viering, Jentschura & Partner mbB Patent- und Rechtsanwälte
(86) International application number: PCT/KR2021/011222
(87) International publication number: WO 2022/045706

(57) **Abstract**

Disclosed are a method and a device for retransmission in sidelink communication. An operation method of a transmission terminal comprises the steps of: transmitting first data to a reception terminal on the basis of a first retransmission scheme; transmitting, to the reception terminal, SCI including a first indicator indicating switching of a retransmission scheme and a second indicator indicating whether to reuse a resource reserved for the first retransmission scheme; and transmitting second data to the reception terminal on the basis of a second retransmission scheme started by the SCI.

## Description

### [Technical Field]

The present disclosure relates to a sidelink communication technique, and more particularly, to a technique for retransmitting data in sidelink communication.

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, a data retransmission procedure may be performed in sidelink communication. The data retransmission procedure may be performed based on various schemes. In this case, operation methods of different retransmission schemes are required in sidelink communication.

### [Disclosure]

### [Technical Problem]

An objective of the present disclosure for solving the above-described problem is to provide a method and an apparatus for data retransmission in sidelink communication

### [Technical Solution]

An operation method of a transmitting terminal, according to a first exemplary embodiment of the present disclosure for achieving the objective, may comprise: transmitting first data to a receiving terminal based on a first retransmission scheme; transmitting sidelink control information (SCI) to the receiving terminal, the SCI including a first indicator indicating switching of a retransmission scheme and a second indicator indicating whether to reuse a resource reserved for the first retransmission scheme; and transmitting second data to the receiving terminal based on a second retransmission scheme initiated by the SCI, wherein the first retransmission scheme and the second retransmission scheme are distinguished according to whether a hybrid automatic repeat request (HARQ) feedback is transmitted.

When the second indicator indicates reuse of the reserved resource, a retransmission procedure according to the second retransmission scheme may be performed using the reserved resource.

When the second indicator does not indicate reuse of the reserved resource, a retransmission procedure according to the second retransmission scheme may be performed using a resource allocated by the SCI.

The second indicator may indicate a position of the reserved resource as well as reuse of the reserved resource.

The SCI may include first-stage SCI and second-stage SCI, the second indicator may be included in the second-stage SCI when the first indicator is included in the first-stage SCI, and the second indicator may be included in the first-stage SCI when the first indicator is included in the second-stage SCI.

The first indicator may be represented by a HARQ feedback enable/disable indicator included in second-stage SCI.

The second indicator may be represented by a backward indicator included in first-stage SCI.

When a retransmission operation of the first data is performed using second-stage SCI without first-stage SCI, a type of the SCI initiating the second retransmission scheme may be second-stage SCI.

When the reserved resource does not exist or when a retransmission operation of the first data is performed using first-stage SCI and second stage-SCI, a type of the SCI initiating the second retransmission scheme may be first-stage SCI.

The second retransmission scheme may be a blind retransmission scheme when the first retransmission scheme is a HARQ retransmission scheme, the second retransmission scheme may be the HARQ retransmission scheme when the first retransmission scheme is the blind retransmission scheme, a HARQ feedback may be transmitted when the HARQ retransmission scheme is used, and a HARQ feedback may not be transmitted when the blind retransmission scheme is used.

An operation method of a transmitting terminal, according to a second exemplary embodiment of the present disclosure for achieving the objective, may comprise: transmitting first data to a receiving terminal based on a first retransmission scheme; transmitting sidelink control information (SCI) to the receiving terminal, the SCI including an indicator indicating whether to reuse a resource reserved for the first retransmission scheme; and transmitting second data to the receiving terminal based on a second retransmission scheme initiated by the SCI, wherein the first retransmission scheme and the second retransmission scheme are distinguished according to whether a hybrid automatic repeat request (HARQ) feedback is transmitted.

When the indicator indicates reuse of the reserved resource, a retransmission procedure according to the second retransmission scheme may be performed using the reserved resource, and when the indicator does not indicate reuse of the reserved resource, a retransmission procedure according to the second retransmission scheme may be performed using a resource allocated by the SCI.

The indicator may indicate a position of the reserved resource as well as reuse of the reserved resource.

The SCI may include first-stage SCI and second-stage SCI, and the indicator may be represented by a backward indicator included in the first-stage SCI.

An operation method of a receiving terminal, according to a third exemplary embodiment of the present disclosure for achieving the objective, may comprise: receiving first data from a transmitting terminal based on a first retransmission scheme; receiving sidelink control information (SCI) from the transmitting terminal, the SCI including a first indicator indicating switching of a retransmission scheme and a second indicator indicating whether to reuse a resource reserved for the first retransmission scheme; and receiving second data from the transmitting terminal based on a second retransmission scheme initiated by the SCI, wherein the first retransmission scheme and the second retransmission scheme are distinguished according to whether a hybrid automatic repeat request (HARQ) feedback is transmitted.

When the second indicator indicates reuse of the reserved resource, the second data may be received through the reserved resource, and when the second indicator does not indicate reuse of the reserved resource, the second data may be received through a resource allocated by the SCI.

The SCI may include first-stage SCI and second-stage SCI, the second indicator may be included in the second-stage SCI when the first indicator is included in the first-stage SCI, and the second indicator may be included in the first-stage SCI when the first indicator is included in the second-stage SCI.

The first indicator may be represented by a HARQ feedback enable/disable indicator included in second-stage SCI, and the second indicator may be represented by a backward indicator included in first-stage SCI.

When a retransmission operation of the first data is performed using second-stage SCI without first-stage SCI, a type of the SCI initiating the second retransmission scheme may be second-stage SCI.

When the reserved resource does not exist or when a retransmission operation of the first data is performed using first-stage SCI and second stage-SCI, a type of the SCI initiating the second retransmission scheme may be first-stage SCI.

### [Advantageous Effects]

According to the present disclosure, the transmitting terminal can transmit data to the receiving terminal based on the first retransmission scheme, switch the first retransmission scheme to the second retransmission scheme, and transmit the data to the receiving terminal based on the second retransmission scheme. In particular, the transmitting terminal may transmit SCI indicating switching of the retransmission scheme and/or reuse or release of reserved resources. In this case, the first retransmission scheme may be switched to the second retransmission scheme according to the indication of the SCI, and in a retransmission procedure according to the second retransmission scheme, resources reserved for the first retransmission scheme or new resources may be used. Accordingly, in sidelink communication, the retransmission scheme can be efficiently switched, and the performance of communication system can be improved.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a LTE performing sidelink communication.
FIG. 5 is a block diagram illustrating a first exemplary embodiment of a control plane protocol stack of a LTE performing sidelink communication.
FIG. 6 is a block diagram illustrating a second exemplary embodiment of a control plane protocol stack of a LTE performing sidelink communication.
FIG. 7 is a sequence chart illustrating a first exemplary embodiment of a retransmission method according to a HARQ retransmission scheme in sidelink communication.
FIG. 8 is a sequence chart illustrating a first exemplary embodiment of a retransmission method according to a blind retransmission scheme in sidelink communication.
FIG. 9 is a sequence chart illustrating a first exemplary embodiment of a retransmission scheme switching method in sidelink communication.
FIG. 10 is a sequence chart illustrating a second exemplary embodiment of a retransmission scheme switching method in sidelink communication.
FIG. 11 is a sequence chart illustrating a third exemplary embodiment of a retransmission scheme switching method in sidelink communication.
FIG. 12 is a sequence chart illustrating a fourth exemplary embodiment of a retransmission scheme switching method in sidelink communication.
FIG. 13 is a sequence chart illustrating a fifth exemplary embodiment of a retransmission scheme switching method in sidelink communication.

### [Modes of the Invention]

While the present invention is susceptible to various modifications and alternative forms, specific embodiments are shown by way of example in the drawings and described in detail. It should be understood, however, that the description is not intended to limit the present invention to the specific embodiments, but, on the contrary, the present invention is to cover all modifications, equivalents, and alternatives that fall within the spirit and scope of the present invention.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present invention pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present invention will be described in detail with reference to the accompanying drawings. In describing the present invention, to facilitate the entire understanding, like numbers refer to like elements throughout the description of the figures and the repetitive description thereof will be omitted.

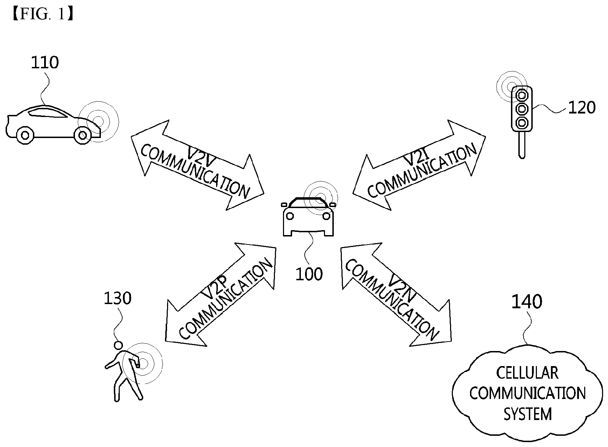

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

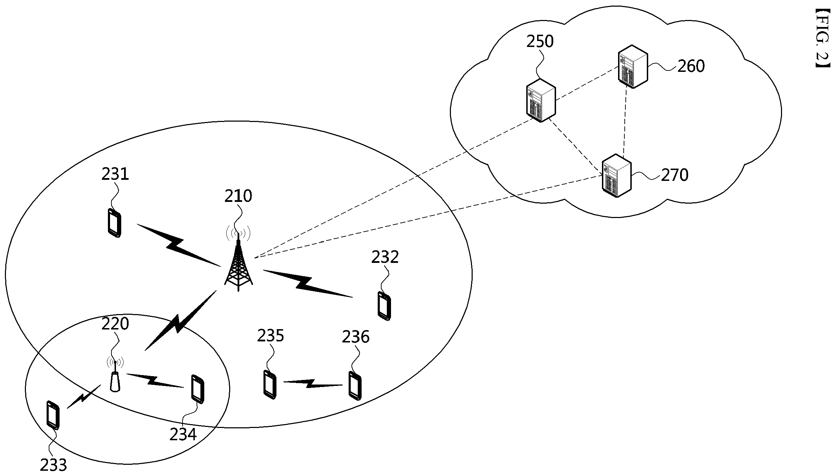

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

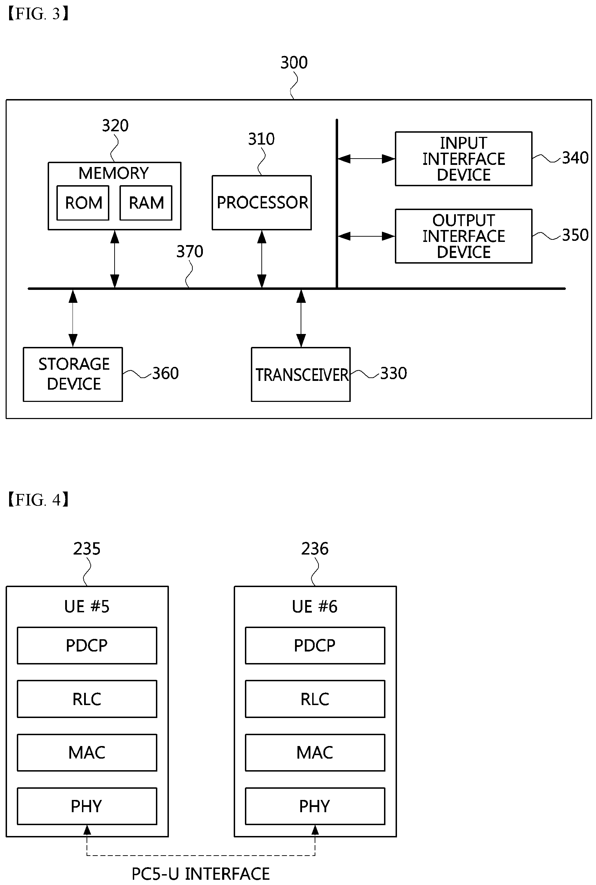

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The LTEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the LTEs 233 and 234 to the base station 210. The LTE 234 may belong to both of the cell coverage of the base station 210 and the cell coverage of the relay 220, and the LTE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multipleoutput (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The LTEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the LTEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a LTE performing sidelink communication.

As shown in FIG. 4, a left LTE may be the LTE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

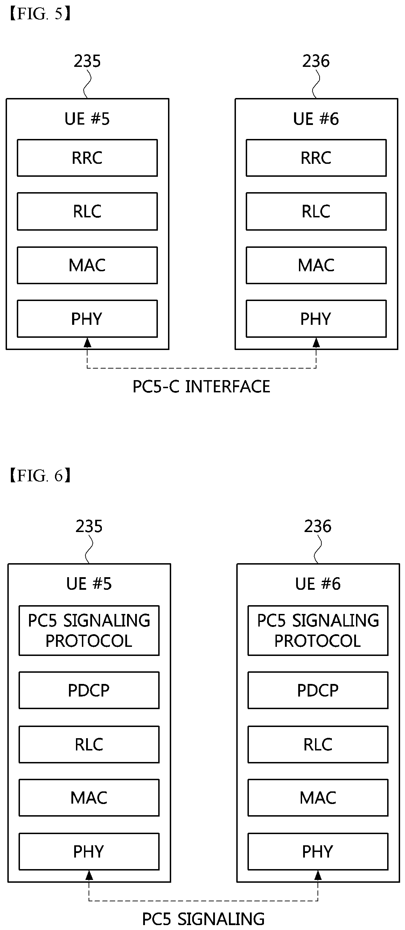

FIG. 5 is a block diagram illustrating a first exemplary embodiment of a control plane protocol stack of a LTE performing sidelink communication, and FIG. 6 is a block diagram illustrating a second exemplary embodiment of a control plane protocol stack of a LTE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the LTE (e.g., LTE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding LTE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a `MAC message' or `MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as `second-stage SCI'. A format of the first-stage SCI may include a SCI format 1-A, and a format of the second-stage SCI may include a SCI format 2-A and a SCI format 2-B.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

Meanwhile, data may be retransmitted in sidelink communication. The data (e.g., sidelink (SL) data) may be retransmitted based on a HARQ retransmission scheme or a blind retransmission scheme. The HARQ retransmission scheme may be referred to as a first retransmission scheme, and the blind retransmission scheme may be referred to as a second retransmission scheme. Alternatively, the HARQ retransmission scheme may be referred to as a second retransmission scheme, and the blind retransmission scheme may be referred to as a first retransmission scheme. When the HARQ retransmission scheme is used, when a negative acknowledgment (NACK) or discontinuous transmission (DTX) for data occurs, the data may be retransmitted. A case when the HARQ retransmission scheme is used may mean that a HARQ feedback is enabled. A case when the blind retransmission scheme is used, the data may be retransmitted regardless of a HARQ feedback (e.g., NACK or DTX) for the data. The case when the blind retransmission scheme is used may mean that a HARQ feedback is disabled.

Sidelink communication may support the HARQ retransmission scheme and/or blind retransmission scheme. For example, the HARQ retransmission scheme may be used in sidelink communication, and the retransmission scheme may be switched from the HARQ retransmission scheme to the blind retransmission scheme when preconfigured condition(s) (e.g., triggering condition(s)) are satisfied. Alternatively, the blind retransmission scheme may be used in sidelink communication, and the retransmission scheme may be switched from the blind retransmission scheme to the HARQ retransmission scheme when preconfigured condition(s) (e.g., triggering condition(s)) are satisfied. The switching of the retransmission scheme may be performed in unit of data, transport block (TB), code block group (CBG), or HARQ process.

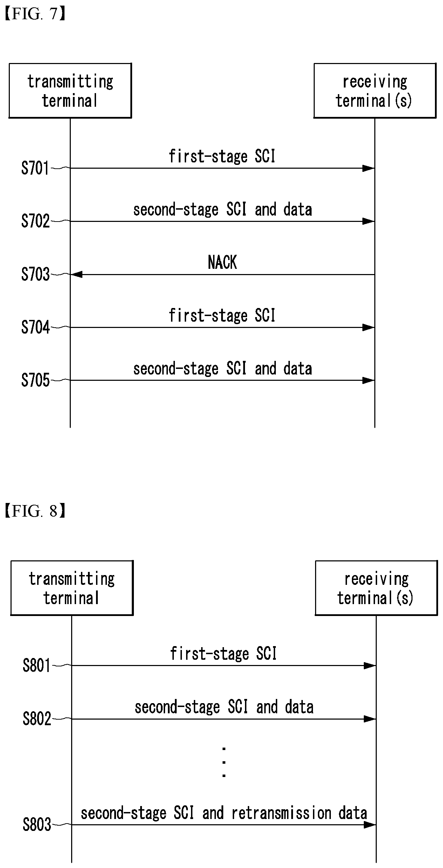

FIG. 7 is a sequence chart illustrating a first exemplary embodiment of a retransmission method according to a HARQ retransmission scheme in sidelink communication.

As shown in FIG. 7, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 7 may be one or more receiving terminals. That is, the method shown in FIG. 7 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

Before a step S701, configuration information of sidelink communication (e.g., configuration information for the HARQ retransmission scheme) may transmitted to the transmitting terminal and/or the receiving terminal through system information and/or higher layer signaling (e.g., RRC message and/or MAC CE). The transmitting terminal may transmit first-stage SCI to the receiving terminal on a PSCCH (S701). The receiving terminal may receive the first-stage SCI from the transmitting terminal, and may identify information element(s) included in the first-stage SCI. The transmitting terminal may transmit second-stage SCI (e.g., second-stage SCI associated with the first-stage SCI transmitted in the step S701) and data to the receiving terminal on a PSSCH (S702). The receiving terminal may receive the second-stage SCI from the transmitting terminal, and may identify information element(s) included in the second-stage SCI. The receiving terminal may perform a data reception operation based on the first-stage SCI and/or the second-stage SCI.

When reception of the data fails (e.g., decoding of the data fails), the receiving terminal may transmit a NACK for the data to the transmitting terminal on a PSFCH (S703). When the NACK is received from the receiving terminal, the transmitting terminal may determine that reception of the data has failed in the receiving terminal. In this case, the transmitting terminal may retransmit the data to the receiving terminal (S704). The first-stage SCI transmitted in the step S704 may be SCI for retransmission. That is, the first-stage SCI may include scheduling information for retransmission data. The transmitting terminal may transmit the second-stage SCI and data (e.g., retransmission data) to the receiving terminal on a PSSCH (S705). Alternatively, the retransmission data may be transmitted without the first-stage SCI and second-stage SCI or without the second-stage SCI. In the steps S704 and S705, the receiving terminal may perform a reception operation of the retransmission data. For example, the receiving terminal may receive the first-stage SCI and second-stage SCI, and may receive the retransmission data based on the received SCIs. Alternatively, the receiving terminal may receive the retransmission data without receiving the first-stage SCI and second-stage SCI or without receiving the second-stage SCI.

In exemplary embodiments, the second-stage SCI and the data may be transmitted on the same PSSCH. Alternatively, the second-stage SCI and the data may be transmitted on different PSSCHs. Alternatively, the second-stage SCI may be transmitted on a PSCCH, and the data may be transmitted on a PSSCH. When the single-SCI scheme is used, the retransmission procedure according to the HARQ retransmission scheme may be performed based on single SCI (e.g., first-stage SCI) without second-stage SCI. In this case, the retransmission data may be transmitted together with first-stage SCI instead of second-stage SCI. Alternatively, the data may be retransmitted without first-stage SCI (e.g., single SCI). In exemplary embodiments, single SCI may mean SCI used when the single-SCI scheme is applied.

FIG. 8 is a sequence chart illustrating a first exemplary embodiment of a retransmission method according to a blind retransmission scheme in sidelink communication.

As shown in FIG. 8, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 8 may be one or more receiving terminals. That is, the method shown in FIG. 8 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

Before a step S801, configuration information of sidelink communication (e.g., configuration information for the blind retransmission scheme) may transmitted to the transmitting terminal and/or the receiving terminal through system information and/or higher layer signaling (e.g., RRC message and/or MAC CE). The transmitting terminal may transmit first-stage SCI to the receiving terminal on a PSCCH (S801). The receiving terminal may receive the first-stage SCI from the transmitting terminal, and may identify information element(s) included in the first-stage SCI. The transmitting terminal may transmit second-stage SCI (e.g., second-stage SCI associated with the first-stage SCI transmitted in the step S801) and data to the receiving terminal on a PSSCH (S802). The receiving terminal may receive the second-stage SCI from the transmitting terminal, and may identify information element(s) included in the second-stage SCI. The receiving terminal may perform a data reception operation based on the first-stage SCI and/or the second-stage SCI.

After transmitting the first-stage SCI and the second-stage SCI, the transmitting terminal may retransmit the data (S803). The transmitting terminal may perform repeated data transmissions based on blind retransmission related information configured by system information, higher layer signaling, first-stage SCI, and/or second-stage SCI. In addition, the receiving terminal may perform a reception operation of the retransmission data based on the blind retransmission related information configured by system information, higher layer signaling, first-stage SCI, and/or second-stage SCI.

In the step S803, the second-stage SCI and the data (e.g., retransmission data) may be transmitted to the receiving terminal on a PSSCH. Alternatively, in the step S803, the data may be retransmitted without the second-stage SCI.

In exemplary embodiments, the second-stage SCI and the data may be transmitted on the same PSSCH. Alternatively, the second-stage SCI and the data may be transmitted on different PSSCHs. Alternatively, the second-stage SCI may be transmitted on a PSCCH, and the data may be transmitted on a PSSCH. When the single-SCI scheme is used, the retransmission procedure according to the blind retransmission scheme may be performed based on single SCI (e.g., first-stage SCI) without second-stage SCI. In this case, the retransmission data may be transmitted together with the single SCI instead of second-stage SCI. Alternatively, the data may be retransmitted without first-stage SCI (e.g., single SCI).

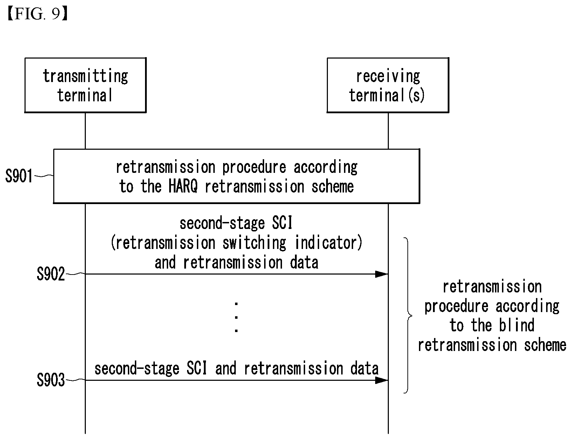

FIG. 9 is a sequence chart illustrating a first exemplary embodiment of a retransmission scheme switching method in sidelink communication.

As shown in FIG. 9, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 9 may be one or more receiving terminals. That is, the method shown in FIG. 9 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

In sidelink communication, the retransmission scheme may be switched from the HARQ retransmission scheme to the blind retransmission scheme. In a step S901, a retransmission procedure according to the HARQ retransmission scheme may be performed between the transmitting terminal and the receiving terminal. The step S901 may include the steps S701 to S705 shown in FIG. 7. When n NACKs occur for the same data (e.g., TB or CBG) in the step S901 or when the number of NACKs for the same data (e.g., TB or CBG) is greater than or equal to a threshold in the step S901, the transmitting terminal may transmit to the transmitting terminal a retransmission switching indicator indicating switching of the retransmission scheme (S902). Alternatively, the retransmission switching indicator may be transmitted regardless of the above-described condition(s). n may be a natural number. The threshold may be signaled to the transmitting terminal and/or the receiving terminal through at least one of system information, RRC message, MAC CE, or control information (e.g., DCI, SCI).

The retransmission switching indicator may indicate switching from the HARQ retransmission scheme to the blind retransmission scheme. The size of the retransmission switching indicator may be 1 bit or more. The retransmission switching indicator may be included in second-stage SCI. When there is a resource available for the blind retransmission scheme, the retransmission switching indicator may be included in second-stage SCI instead of first-stage SCI. In this case, retransmission data and second-stage SCI including the retransmission switching indicator may be transmitted in the step S902. The blind retransmission related information may be transmitted through the second-stage SCI. When the single-SCI scheme is used, the retransmission switching indicator may be included in single SCI (e.g., first-stage SCI) instead of second-stage SCI. The second-stage SCI transmitted in the step S902 may trigger or initiate a retransmission procedure according to the blind retransmission scheme.

In the step S902, the receiving terminal may receive the retransmission switching indicator from the transmitting terminal. When the retransmission switching indicator is received from the transmitting terminal, the receiving terminal may determine that the retransmission scheme of sidelink communication is switched from the HARQ retransmission scheme to the blind retransmission scheme. Therefore, the receiving terminal may receive retransmission data based on the blind retransmission scheme.

The transmitting terminal may retransmit data based on the blind retransmission-related information configured by system information, RRC message, MAC CE, first-stage SCI, and/or second-stage SCI (S903). The receiving terminal may perform a reception operation of the retransmission data based on the blind retransmission related information configured by system information, RRC message, MAC CE, first-stage SCI, and/or second-stage SCI. A resource used for the first blind retransmission may be a resource reserved by the previous SCI (e.g., the first-stage SCI in the step S901). For example, the resource used for the first blind retransmission may be a resource reserved for HARQ retransmission.

In the retransmission procedure according to the blind retransmission scheme, data may be transmitted together with second-stage SCI. Alternatively, the data may be transmitted together with second-stage SCI in the first retransmission according to the blind retransmission scheme (e.g., at the time of switching the retransmission scheme), and the data may be transmitted without second-stage SCI from the second retransmission according to the blind retransmission scheme. In the retransmission procedure according to the blind retransmission scheme, the data may be retransmitted a preset number of times.

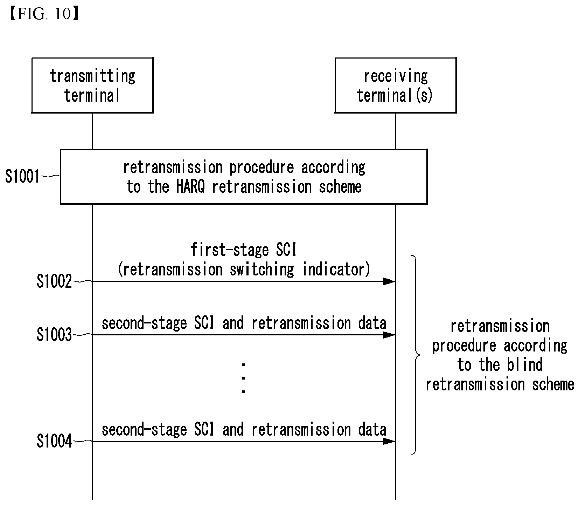

FIG. 10 is a sequence chart illustrating a second exemplary embodiment of a retransmission scheme switching method in sidelink communication.

As shown in FIG. 10, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 10 may be one or more receiving terminals. That is, the method shown in FIG. 10 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

In sidelink communication, the retransmission scheme may be switched from the HARQ retransmission scheme to the blind retransmission scheme. In a step S1001, a retransmission procedure according to the HARQ retransmission scheme may be performed between the transmitting terminal and the receiving terminal. The step S1001 may include the steps S701 to S705 shown in FIG. 7. That is, the step S1001 may be the same as the step S901 shown in FIG. 9. When n NACKs occur for the same data (e.g., TB or CBG) in the step S1001 or when the number of NACKs for the same data (e.g., TB or CBG) is greater than or equal to a threshold in the step S1001, the transmitting terminal may transmit to the transmitting terminal a retransmission switching indicator indicating switching of the retransmission scheme (S1002). The retransmission switching indicator may be transmitted regardless of the above-described condition(s). n may be a natural number. The threshold may be signaled to the transmitting terminal and/or the receiving terminal through at least one of system information, RRC message, MAC CE, or control information (e.g., DCI, SCI).

The retransmission switching indicator may indicate switching from the HARQ retransmission scheme to the blind retransmission scheme. The size of the retransmission switching indicator may be 1 bit or more. The retransmission switching indicator may be included in first-stage SCI. When there is not a resource available for the blind retransmission scheme, the retransmission switching indicator may be included in first-stage SCI instead of second-stage SCI. Alternatively, the retransmission switching indicator may be included in second-stage SCI. Thereafter, a retransmission procedure according to the blind retransmission scheme may be performed using a resource (e.g., reserved resource) allocated by the first-stage SCI transmitted in the step S1002. Alternatively, even when there is a resource available for the blind retransmission scheme, the retransmission switching indicator may be included in first-stage SCI instead of second-stage SCI. In this case, the first-stage SCI transmitted in the step S1002 may indicate release of resources for the HARQ retransmission scheme configured in the step S1001. That is, the resources for the HARQ retransmission scheme configured in the step S1001 may be overridden with resources for the blind retransmission scheme by the first-stage SCI transmitted in the step S1002. Alternatively, the first-stage SCI transmitted in the step S1002 may be used to configure new blind retransmission resources.

The retransmission procedure according to the blind retransmission scheme may be triggered or initiated by the first-stage SCI transmitted in the step S 1002. In the step S 1002, the receiving terminal may receive the retransmission switching indicator from the transmitting terminal. When the retransmission switching indicator is received from the transmitting terminal, the receiving terminal may determine that the retransmission scheme of sidelink communication is switched from the HARQ retransmission scheme to the blind retransmission scheme. The transmitting terminal may retransmit data based on blind retransmission related information configured by system information, RRC message, MAC CE, first-stage SCI, and/or second-stage SCI (S 1003 and S 1004). The receiving terminal may perform a reception operation of retransmission data based on the blind retransmission related information configured by system information, RRC message, MAC CE, first-stage SCI, and/or second-stage SCI. Here, the retransmission switching indicator may be transmitted through second-stage SCI.

In the retransmission procedure according to the blind retransmission scheme, the data may be transmitted together with second-stage SCI. Alternatively, the data may be transmitted together with second-stage SCI in the first retransmission according to the blind retransmission scheme (e.g., at the time of switching the retransmission scheme), and the data may be transmitted without second-stage SCI from the second retransmission according to the blind retransmission scheme. In the retransmission procedure according to the blind retransmission scheme, the data may be retransmitted a preset number of times.

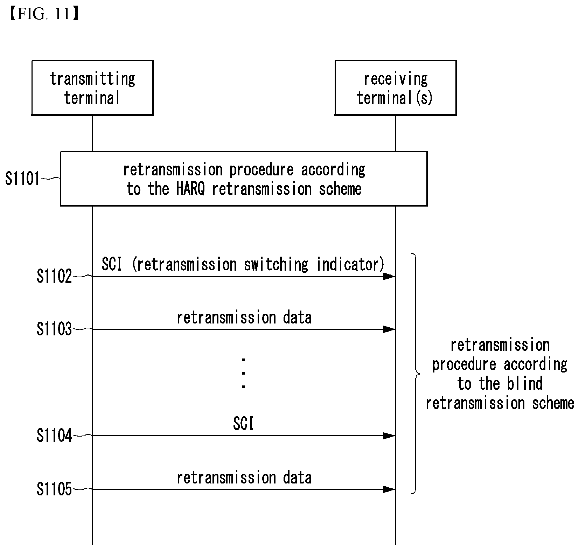

FIG. 11 is a sequence chart illustrating a third exemplary embodiment of a retransmission scheme switching method in sidelink communication.

As shown in FIG. 11, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 11 may be one or more receiving terminals. That is, the method shown in FIG. 11 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

In sidelink communication, the retransmission scheme may be switched from the HARQ retransmission scheme to the blind retransmission scheme. Here, sidelink communication may be performed using single SCI. In a step S1101, a retransmission procedure according to the HARQ retransmission scheme may be performed between the transmitting terminal and the receiving terminal. The step S1101 may include the steps S701 to S705 shown in FIG. 7. That is, the step S1101 may be the same as the step S901 shown in FIG. 9. When n NACKs occur for the same data (e.g., TB or CBG) in the step S1101 or when the number of NACKs for the same data (e.g., TB or CBG) is greater than or equal to a threshold in the step S1101, the transmitting terminal may transmit a retransmission switching indicator indicating switching of the retransmission scheme to the receiving terminal (S1102). The retransmission switching indicator may be transmitted regardless of the above condition(s). n may be a natural number. The threshold may be signaled to the transmitting terminal and/or the receiving terminal through at least one of system information, RRC message, MAC CE, and control information (e.g., DCI, SCI).

The retransmission switching indicator may indicate switching from the HARQ retransmission scheme to the blind retransmission scheme. The size of the retransmission switching indicator may be 1 bit or more. The retransmission switching indicator may be included in SCI (e.g., single SCI). In addition, the SCI may include blind retransmission related information (e.g., resource allocation information for retransmission of data). The SCI may trigger or initiate a retransmission procedure according to the blind retransmission scheme. The transmitting terminal may retransmit the data after transmitting the SCI including the retransmission switching indicator (S1103). The data may be retransmitted based on the blind retransmission related information configured by system information, RRC message, MAC CE, and/or SCI.

The receiving terminal may receive the retransmission switching indicator from the transmitting terminal. When the retransmission switching indicator is received from the transmitting terminal, the receiving terminal may determine that the retransmission scheme of sidelink communication is switched from the HARQ retransmission scheme to the blind retransmission scheme. The receiving terminal may perform a reception operation of retransmission data based on the blind retransmission related information configured by system information, RRC message, MAC CE, and/or SCI.

In the retransmission procedure according to the blind retransmission scheme, data may be retransmitted a preset number of times. The step S1104 may be performed identically or similarly to the step S1102, and the step S1105 may be performed identically or similarly to the step S1103. In the retransmission procedure according to the blind retransmission scheme, the data may be transmitted together with SCI. For example, the data may be retransmitted after transmission of the SCI. Alternatively, the data may be transmitted with SCI in the first retransmission according to the blind retransmission scheme (e.g., at the time of switching of the retransmission scheme), and the data may be transmitted without SCI from the second retransmission according to the blind retransmission scheme.

Meanwhile, when switching from the HARQ retransmission scheme to the blind retransmission scheme is performed in the exemplary embodiments shown in FIGS. 9 to 11, the retransmission scheme may be switched as follows.
- Switching of the retransmission scheme by first-stage SCI including a retransmission switching indicator
- Switching of the retransmission scheme by second-stage SCI including a retransmission switching indicator
- Switching of the retransmission scheme by first-stage SCI and second-stage SCI including a retransmission switching indicator
- When the single-SCI scheme is used, switching of the retransmission scheme by single SCI including a retransmission switching indicator

An indicator indicating reuse of a resource (e.g., scheduled resource) reserved by SCI prior to switching of the retransmission scheme may be additionally transmitted to the receiving terminal. Alternatively, an indicator indicating release of a resource reserved by SCI prior to switching of the retransmission scheme may be additionally transmitted to the receiving terminal. Resource reservation information (e.g., scheduling information, resource allocation information) for new resources for the blind retransmission scheme may be transmitted through SCI(s).

The retransmission switching indicator and the resource reuse/release indicator may be included in SCI (e.g., first-stage SCI, second-stage SCI, and/or SCI (i.e., single SCI)). That is, the retransmission switching indicator and the resource reuse/release indicator may be explicitly indicated by SCI. The retransmission switching indicator and the resource reuse/release indicator may be configured with 2 bits as shown in Table 3 below. A first bit among the 2 bits may be the retransmission switching indicator, and a second bit among the 2 bits may be the resource reuse/release indicator.

**[Table 3]**

| **Bit information** | **First value (e.g., 0)** | **Second value (e.g., 1)** |
|---|---|---|
| First bit (retransmission switching indicator) | HARQ retransmission scheme | Blind retransmission scheme |
| Second bit (resource reuse/release indicator) | Reuse of a resource reserved for the previous retransmission scheme | Release of a resource reserved for the previous retransmissions scheme |

A field set to ` 10' according to Table 3 may be transmitted through SCI. In this case, the above-described field (i.e., 10) may indicate switching from the HARQ retransmission scheme to the blind retransmission scheme and reuse of a resource reserved for the previous retransmission scheme (i.e., HARQ retransmission scheme). A field set to '11' according to Table 3 may be transmitted through SCI. In this case, the above-described field (i.e., 11) may indicate switching from the HARQ retransmission scheme to the blind retransmission scheme and release of a resource reserved for the previous retransmission scheme (i.e., HARQ retransmission scheme). The release of a reserved resource may mean that the reserved resource is not reused.

A field set to `00' according to Table 3 may be transmitted through SCI. In this case, the above-described field (i.e., 00) may indicate switching from the blind retransmission scheme to the HARQ retransmission scheme and reuse of a resource reserved for the previous retransmission scheme (i.e., blind retransmission scheme). A field set to '01' according to Table 3 may be transmitted through SCI. In this case, the above-described field (i.e., 01) may indicate switching from the blind retransmission scheme to the HARQ retransmission scheme and release of a resource reserved for the previous retransmission scheme (i.e., blind retransmission scheme).

Alternatively, in Table 3, the retransmission switching indicator may be configure in form of a toggle bit. In this case, the retransmission switching indicator set to 0 may indicate maintaining of the previous retransmission scheme, and the retransmission switching indicator set to 1 may indicate switching of the retransmission scheme. In addition, in Table 3, the resource reuse/release indicator may be configured in form of a toggle bit. In this case, the resource reuse/release indicator set to 0 may indicate that a previously reserved resource is not released, and the resource reuse/release indicator set to 1 may indicate that a previously reserved resource is released.

The switching from the HARQ retransmission scheme to the blind retransmission scheme and reuse of a resource reserved for the previous retransmission scheme may be indicated by SCI. In this case, when the number of blind retransmissions is greater than the number of resources reserved for the previous retransmission scheme, the SCI indicating switching to the blind retransmission scheme may include reservation information (e.g., allocation information, scheduling information) of additional resources for blind retransmission. Alternatively, in a blind retransmission step using the last resource reserved for the previous retransmission scheme, the SCI including reservation information of additional resources for blind retransmission may be transmitted. The resources reserved before the switching to the blind retransmission scheme and resources newly reserved for the blind retransmission scheme may be used according to a temporally precedent order.

When the number of blind retransmissions is less than the number of reserved resources (e.g., the number of resources reserved for the previous retransmission scheme), the remaining reserved resources may not be used for blind retransmission. In the last blind retransmission step, SCI indicating release of the reserved resource(s) may be transmitted. Additional resources for blind retransmission may be reserved at any time by SCI transmitted in the process of blind retransmission.

The resource reuse/release information may be indicated by a backward indicator indicating an index of a reserved resource. SCI (e.g., first-stage SCI, second-stage SCI, and/or single SCI) may include a backward indicator having a size of 1 bit, and the backward indicator may be configured as shown in Table 4 below.

**[Table 4]**

| **Backward indicator** | **Indication information** |
|---|---|
| First value (e.g., 0) | SL transmission using a reserved resource is present after the current SL transmission |
| Second value (e.g., 1) | SL transmission using a reserved resource is not present after the current SL transmission |

The backward indicator may indicate whether there is additional sidelink transmission using a reserved resource after current sidelink transmission. The backward indicator defined in Table 4 may be included in SCI, instead of the resource reuse/release indicator defined in Table 3. The backward indicator set to 0 may indicate that SL transmission exists after the current sidelink transmission. That is, the backward indicator set to 0 may indicate reuse of a reserved resource. The backward indicator set to 1 may indicate that SL transmission does not exist after the current sidelink transmission. That is, the backward indicator set to 1 may indicate `no reserved resource' or `release of a reserved resource'.

Alternatively, the size of the backward indicator may be 2 bits. In this case, the backward indicator may indicate a relative position for three reserved resources. For example, the backward indicator having 2 bits may be configured as shown in Table 5 below.

**[Table 5]**

| **Backward indicator** | **Indication information** |
|---|---|
| 00 | Reuse of the first reserved resource |
| 01 | Reuse of the second reserved resource |
| 10 | Reuse of the third reserved resource |
| 11 | Release of reserved resources |

The backward indicator set to ` 1 1' may indicate release of reserved resources. When switching from the HARQ retransmission scheme to the blind retransmission scheme is indicated and the backward indicator is set to 00, 01, or 10, the backward indicator may indicate reuse of a reserved resource indicated by the backward indicator. The HARQ retransmission scheme may be switched to the blind retransmission scheme, the first reserved resource among the reserved resources may be used for the HARQ retransmission scheme, and reserved resources from the second reserved resource may be used for the blind retransmission scheme. In this case, the transmitting terminal may transmit SCI (e.g., first-stage SCI, second-stage SCI, and/or single SCI) including the retransmission switching indicator and the backward indicator set to 01. A retransmission procedure according to the blind retransmission scheme may be performed using resources associated with the above-described SCI.

The HARQ retransmission scheme may be switched to the blind retransmission scheme, the second reserved resource among the reserved resources may be used for the HARQ retransmission scheme, and reserved resources from the third reserved resource may be used for the blind retransmission scheme. In this case, the transmitting terminal may transmit SCI (e.g., first-stage SCI, second-stage SCI, and/or single SCI) including the retransmission switching indicator and the backward indicator set to 10. A retransmission procedure according to the blind retransmission scheme may be performed using resources associated with the above-described SCI.

In order to release resources reserved for the previous retransmission scheme, the transmitting terminal may transmit SCI including the backward indicator set to 11. Upon receiving the backward indicator set to 11, the receiving terminal may determine that resources reserved for the previous retransmission scheme are released. The reserved resources may be released after transmission of the SCI including the backward indicator set to 11 or retransmission through a data resource associated with the SCI.

When the HARQ retransmission scheme is switched to the blind retransmission scheme, all of the reserved resource indicated by the backward indicator included in the first SCI and the reserved resource(s) subsequent to the corresponding reserved resource may be reused. For example, when the backward indicator included in the first SCI is set to 01, the second reserved resource corresponding to 01 and all reserved resource(s) after the second reserved resource may be used for blind retransmission.

When the HARQ retransmission scheme is switched to the blind retransmission scheme and the backward indicator included in the SCI (e.g., the first SCI) is set to 11, up to a data resource associated with the SCI (e.g., scheduling by the SCI) may be used for blind retransmission, and the reserved resource (s) after the data resource associated with the corresponding SCI may be released.

When the HARQ retransmission scheme is switched to the blind retransmission scheme, and the backward indicator included in the SCI (e.g., the first SCI) is set to a value (e.g., 00, 01, or 10) other than 11, the reserved resource(s) may be used for blind retransmission. When the backward indicator included in the SCI is set to 11, up to a data resource associated with the SCI may be used for blind retransmission, and the reserved resource (s) after the data resource associated with the corresponding SCI may be released.

Alternatively, resources after the SCI including the backward indicator set to 11 (e.g., a data resource associated with the SCI and reserved resource(s) after the corresponding data resource) may be released. When the retransmission switching indicator defined in Table 3 is transmitted without release indication for the reserved resource, this may indicate the release of the reserved resource. Alternatively, when resources reserved for the previous retransmission scheme exist, the resources reserved for the previous retransmission scheme may be reused for the current retransmission scheme (e.g., switched retransmission scheme).

When the retransmission scheme is switched using only second-stage SCI as in the exemplary embodiment shown in FIG. 9, a combination of the first bit (i.e., retransmission switching indicator) defined in Table 3 and the backward indicator defined in Table 4 or Table 5 may be included in the second-stage SCI. In this case, the second-stage SCI may indicate reuse or release of the reserved resources as well as switching of the retransmission scheme. Alternatively, when the retransmission scheme is switched without first-stage SCI, resources reserved for the previous retransmission scheme may be reused. Alternatively, when resources reserved for the previous retransmission scheme are reused, the retransmission scheme may be switched without first-stage SCI. In the above-described exemplary embodiments (e.g., exemplary embodiments in which the retransmission scheme is switched without first-stage SCI), the second-stage SCI may not include information indicating reuse or release of the reserved resources. However, the retransmission switching indicator (e.g., the first bit defined in Table 3) may be included in the second-stage SCI. SCI (e.g., first-stage SCI, second-stage SCI, and/or single SCI) may include the backward indicator without the retransmission switching indicator. In this case, the SCI including the backward indicator may be interpreted as SCI indicating switching of the retransmission scheme.

The HARQ feedback enable/disable indicator included in second-stage SCI may be used as the retransmission switching indicator. In this case, when the HARQ feedback enable/disable indicator indicates that HARQ feedback is enabled, it may indicate maintaining of the HARQ retransmission scheme without switching the retransmission scheme. When the HARQ feedback enable/disable indicator indicates that HARQ feedback is disabled, it may indicate switching from the HARQ retransmission scheme to the blind retransmission scheme.

Both first-stage SCI and second-stage SCI may be used to indicate switching of the retransmission scheme and reuse or release of the reserved resources. In this case, at least one indicator among the retransmission switching indicator, resource reuse/release indicator, and backward indicator may be included in the first-stage SCI, and the remaining indicators not included in the first-stage SCI may be included in the second-stage SCI. For example, the retransmission switching indicator defined in Table 3 may be included in the first-stage SCI, and the resource reuse/release indicator defined in Table 3 may be included in the second-stage SCI. Alternatively, the retransmission switching indicator defined in Table 3 may be included in the second-stage SCI, and the resource reuse/release indicator defined in Table 3 may be included in the first-stage SCI.

The existing field(s) included in first-stage SCI and second-stage SCI may be used to indicate (e.g., express) the retransmission switching indicator, the resource reuse/release indicator, and/or the backward indicator. For example, the HARQ feedback enable/disable indicator included in the second-stage SCI may be used to indicate the retransmission switching indicator. The backward indicator included in the first-stage SCI may be used to indicate the resource reuse/release indicator.

The method for indicating switching of the retransmission scheme may be performed according to the exemplary embodiment shown in FIG. 9 (e.g., switching of the retransmission scheme by second-stage SCI) or the exemplary embodiment shown in FIG. 10 (e.g., switching of the retransmission scheme by first-stage SCI). The transmitting terminal may select a method for indicating switching of the retransmission scheme (e.g., the exemplary embodiment shown in FIG. 9 or the exemplary embodiment shown in FIG. 10) and may use the selected method for indicating switching.

In the retransmission procedure according to the HARQ retransmission scheme, data retransmission may be performed using second-stage SCI without first-stage SCI. In this case, in order to reuse resources reserved for the HARQ retransmission scheme and minimize a latency of switching the retransmission scheme, switching from the HARQ retransmission scheme to the blind retransmission scheme may be indicated through the second-stage SCI. However, when there is no resource reserved for the HARQ retransmission scheme, the switching from the HARQ retransmission scheme to the blind retransmission scheme may be indicated through first-stage SCI. When both first-stage SCI and second-stage SCI are used in the retransmission procedure according to the HARQ retransmission scheme, the switching from the HARQ retransmission scheme to the blind retransmission scheme may be indicated through the first-stage SCI as in the exemplary embodiment shown in FIG. 10.

In the retransmission procedure according to the HARQ retransmission scheme, transmission of the first-stage SCI may be selectively performed. In this case, when switching from the HARQ retransmission scheme to the blind retransmission scheme, the exemplary embodiment shown in FIG. 9 or the exemplary embodiment shown in FIG. 10 may be used according to a reserved state of resources for the HARQ retransmission scheme. For example, when there is a resource reserved for the HARQ retransmission scheme, and the reserved resource is a transmission resource of first-stage SCI, the exemplary embodiment shown in FIG. 10 may be used. For another example, when a transmission resource of first-stage SCI is not reserved, the exemplary embodiment shown in FIG. 9 may be used. For another example, when there is no resource reserved for the HARQ retransmission scheme, the exemplary embodiment shown in FIG. 10 may be used.

In SL groupcast communication or SL unicast communication, the receiving terminal(s) may report channel state information to the transmitting terminal. When the transmitting terminal receives channel state information from less than a specific number of receiving terminals, when one or more receiving terminals having a channel state below a specific threshold exist, when the number of receiving terminals having a channel state equal to or less than a specific threshold is greater than or equal to a specific number, or when it is difficult to reliably perform HARQ retransmission operations, the HARQ retransmission scheme may be switched to the blind retransmission scheme.

The transmitting terminal may transmit SCI including a zone ID and/or communication range information to the receiving terminal(s). The receiving terminal(s) may receive the SCI from the transmitting terminal, and may identify the zone ID and/or communication range information included in the SCI. The receiving terminal(s) may determine a possibility of receiving a channel and/or signal from the transmitting terminal based on the zone ID and/or the communication range information (e.g., channel state associated with the communication range information). When it is determined that it is difficult to receive a channel and/or signal from the transmitting terminal, the receiving terminal(s) may transmit corresponding information (e.g., possibility of receiving a channel and/or signal) to the transmitting terminal, and the transmitting terminal may receive the corresponding information from the receiving terminal(s). When it is determined that it is difficult for the receiving terminal(s) to receive a channel and/or signal based on the corresponding information, the transmitting terminal may switch the HARQ retransmission scheme to the blind retransmission scheme.

When more than a certain number of receiving terminals deviate from a zone indicated by the zone ID included in the SCI transmitted from the transmitting terminal or when more than a certain number of receiving terminals move out of a communication range indicated by the communication range information included in the SCI transmitted from the transmitting terminal, the transmitting terminal may not be able to receive HARQ feedback (e.g., HARQ-ACK) from the receiving terminals. In this case, the transmitting terminal may switch the HARQ retransmission scheme to the blind retransmission scheme.

For data transmission requiring low-latency, the transmitting terminal may switch the HARQ retransmission scheme to the blind retransmission scheme. To support this operation, the base station may transmit a request of low-latency data transmission and/or a request of switching to the blind retransmission scheme to the transmitting terminal. In this case, a transmission latency between the transmitting terminal and the receiving terminal(s) may be minimized.

In the NR V2X communication network, groupcast and/or unicast service may be provided to the receiving terminal (s), and the receiving terminal (s) may receive data based on the HARQ retransmission scheme. In this case, a situation may occur in which terminal(s) need to move from the NR V2X communication network to the LTE V2X communication network, and the LTE V2X communication network may not support the HARQ retransmission scheme. Therefore, when the receiving terminal(s) moves from the NR V2X communication network to the LTE V2X communication network, the transmitting terminal may indicate to the receiving terminal(s) switching from the HARQ retransmission scheme to the blind retransmission scheme, and may provide seamless communication services to the terminals by using the blind retransmission scheme.

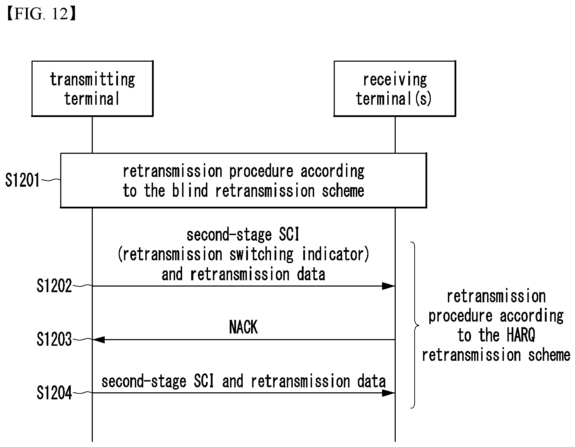

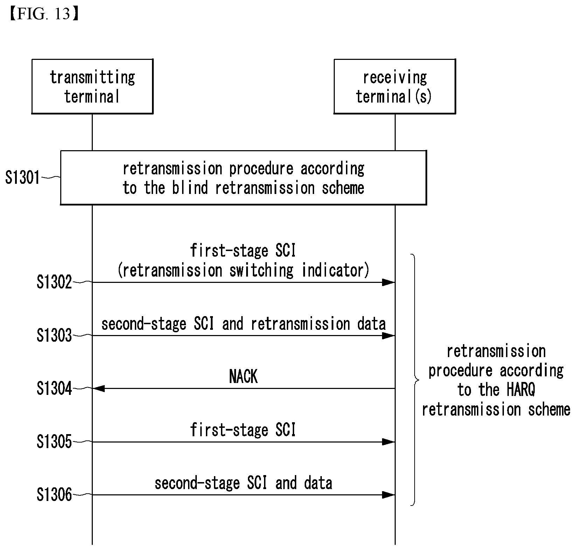

Meanwhile, a method of switching from the blind retransmission scheme to the HARQ retransmission scheme may be performed based on the exemplary embodiment shown in FIG. 12 or FIG. 13.

FIG. 12 is a sequence chart illustrating a fourth exemplary embodiment of a retransmission scheme switching method in sidelink communication.

As shown in FIG. 12, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 12 may be one or more receiving terminals. That is, the method shown in FIG. 12 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

In sidelink communication, the retransmission scheme may be switched from the blind retransmission scheme to the HARQ retransmission scheme. In a step S1201, a retransmission procedure according to the blind retransmission scheme may be performed between the transmitting terminal and the receiving terminal. The step S1201 may include the steps S801 to S803 shown in FIG. 8. The transmitting terminal may transmit a retransmission switching indicator indicating switching of the retransmission scheme to the receiving terminal (S1202). When data is retransmitted n or more times in the step S1201, the retransmission switching indicator may be transmitted. n may be a natural number. n may be signaled to the transmitting terminal and/or the receiving terminal through at least one of system information, RRC message, MAC CE, or control information (e.g., DCI, SCI).

The retransmission switching indicator may indicate switching from the blind retransmission scheme to the HARQ retransmission scheme. The size of the retransmission switching indicator may be 1 bit or more. The retransmission switching indicator may be included in second-stage SCI. When there is a resource available for the HARQ retransmission scheme, the retransmission switching indicator may be included in second-stage SCI instead of first-stage SCI. In this case, retransmission data and the second-stage SCI including the retransmission switching indicator may be transmitted in the step S 1202. When the single-SCI scheme is used, the retransmission switching indicator may be included in single SCI instead of second-stage SCI.

A retransmission procedure according to the HARQ retransmission scheme may be triggered or initiated by the second-stage SCI transmitted in the step S1202. In the step S1202, the receiving terminal may receive the retransmission switching indicator from the transmitting terminal. When the retransmission switching indicator is received from the transmitting terminal, the receiving terminal may determine that the retransmission scheme of sidelink communication is switched from the blind retransmission scheme to the HARQ retransmission scheme. Communication between the transmitting terminal and the receiving terminal may be performed based on HARQ retransmission related information configured by system information, RRC message, MAC CE, first-stage SCI, and/or second-stage SCI. For example, when reception of data fails in the step S1202, the receiving terminal may transmit a NACK for the data to the transmitting terminal (S 1203). When the NACK for the data is received from the receiving terminal, the transmitting terminal may retransmit the data (S1204). In the step S1204, retransmission data may be transmitted together with second-stage SCI. A resources used for the first HARQ retransmission may be a resource reserved by the previous SCI (e.g., the first-stage SCI in the step S1201). For example, the resource used for the first HARQ retransmission may be a resource reserved for blind retransmission.

FIG. 13 is a sequence chart illustrating a fifth exemplary embodiment of a retransmission scheme switching method in sidelink communication.

As shown in FIG. 13, the communication system may include a transmitting terminal and a receiving terminal. The transmitting terminal may mean a terminal transmitting SL data, and the receiving terminal may mean a terminal receiving the SL data. For example, the transmitting terminal may be the LTE 235 shown in FIG. 2 and the receiving terminal may be the UE 236 shown in FIG. 2. The receiving terminal(s) shown in FIG. 13 may be one or more receiving terminals. That is, the method shown in FIG. 13 may be applied to communication between one transmitting terminal and one or more receiving terminals. Each of the transmitting terminal and the receiving terminal may be configured identically or similarly to the communication node 300 shown in FIG. 3. Each of the transmitting terminal and the receiving terminal may support the protocol stacks shown in FIGS. 4 to 6.

In sidelink communication, the retransmission scheme may be switched from the blind retransmission scheme to the HARQ retransmission scheme. In a step S1301, a retransmission procedure according to the blind retransmission scheme may be performed between the transmitting terminal and the receiving terminal. The step S1301 may include the steps S801 to S803 shown in FIG. 8. That is, the step S1301 may be the same as the step S1201 shown in FIG. 12. The transmitting terminal may transmit a retransmission switching indicator indicating switching of the retransmission scheme to the receiving terminal (S1302). When data is retransmitted n or more times in the step S1301, the retransmission switching indicator may be transmitted. n may be a natural number. n may be signaled to the transmitting terminal and/or the receiving terminal through at least one of system information, RRC message, MAC CE, and control information (e.g., DCI, SCI).

The retransmission switching indicator may indicate switching from the blind retransmission scheme to the HARQ retransmission scheme. The size of the retransmission switching indicator may be 1 bit or more. The retransmission transition indicator may be included in first-stage SCI. When there is no resource available for the HARQ retransmission scheme, the retransmission switching indicator may be included in first-stage SCI instead of the second-stage SCI. Thereafter, a retransmission procedure according to the HARQ retransmission scheme may be performed using resources (e.g., reserved resources) allocated by the first-stage SCI transmitted in the step S1302. Alternatively, even when there is a resource available for the HARQ retransmission scheme, the retransmission switching indicator may be included in first-stage SCI instead of second-stage SCI. Alternatively, the retransmission switching indicator may be transmitted through both first-stage SCI and second-stage SCI, through second-stage SCI, or through single SCI. In this case, the first-stage SCI transmitted in the step S1302 may indicate release of resources for the blind retransmission scheme configured in the step S1301. That is, the resources for the blind retransmission scheme configured in the step S1301 may be overridden with resources for the HARQ retransmission scheme by the first-stage SCI transmitted in the step S1302. Alternatively, the first-stage SCI transmitted in the step S1302 may be used to configure new HARQ retransmission resources. Here, the retransmission switching indicator may be transmitted through second-stage SCI.

The retransmission procedure according to the HARQ retransmission scheme may be triggered or initiated by the first-stage SCI transmitted in the step S1302. In the step S1302, the receiving terminal may receive the retransmission switching indicator from the transmitting terminal. When the retransmission switching indicator is received from the transmitting terminal, the receiving terminal may determine that the retransmission scheme of sidelink communication is switched from the blind retransmission scheme to the HARQ retransmission scheme. Communication between the transmitting terminal and the receiving terminal may be performed based on HARQ retransmission related information configured by system information, RRC message, MAC CE, first-stage SCI, and/or second-stage SCI. For example, the transmitting terminal may transmit second-stage SCI and retransmission data to the receiving terminal (S1303).

When reception of the data fails in the step S1303, the receiving terminal may transmit a NACK for the data to the transmitting terminal (S1304). When the NACK for the data is received from the receiving terminal, the transmitting terminal may determine that reception of the data has failed in the receiving terminal. Accordingly, the transmitting terminal may transmit first-stage SCI (S1305), and transmit retransmission data and second-stage SCI associated with the first-stage SCI (S1306). In the steps S1305 and S1306, the receiving terminal may perform a monitoring operation to receive the retransmission data. Alternatively, data retransmission after the first data retransmission (e.g., the step S1303) in the retransmission procedure according to the HARQ retransmission scheme may be performed based on second-stage SCI without first-stage SCI.

In the exemplary embodiments shown in FIGS. 12 and 13, parameter(s) defined in Tables 3 to 5 described above may be applied to interpret/process resources reserved for the previous retransmission scheme.

In the exemplary embodiment shown in FIG. 12, the retransmission switching indicator and resource reuse/release indicator defined in Table 3, a combination of the retransmission switching indicator defined in Table 3 and the backward indicator defined in Table 4 or Table 5, or the backward indicator defined in Table 4 or Table 5 may be transmitted through second-stage SCI (e.g., second-stage SCI in the step S1202). Based on this operation, switching of the retransmission scheme and/or reuse or release of reserved resources may be indicated. When resources reserved for the previous retransmission scheme are reusable, the retransmission scheme may be switched using second-stage SCI without first-stage SCI. In this case, the second-stage SCI may not include information indicating reuse or release of resources reserved for the previous retransmission scheme. However, the retransmission switching indicator may be transmitted through the second-stage SCI in form of the first bit defined in Table 3.

The HARQ feedback enable/disable indicator included in the second-stage SCI may be used as the retransmission switching indicator. In this case, when the HARQ feedback enable/disable indicator indicates that HARQ feedback is enabled, it may indicate maintaining of the HARQ retransmission scheme without switching the retransmission scheme. When the HARQ feedback enable/disable indicator indicates that HARQ feedback is disabled, it may indicate switching from the HARQ retransmission scheme to the blind retransmission scheme.

In the exemplary embodiment shown in FIG. 13, the first-stage SCI or single SCI may include the retransmission switching indicator and the resource reuse/release indicator defined in Table 3, and accordingly, switching of the retransmission scheme and reuse or release of reserved resources may be explicitly indicated. The first-stage SCI or single SCI may include the backward indicator defined in Table 4 or Table 5, and accordingly, reuse or release of reserved resources may be explicitly indicated. In this case, in order to indicate switching of the retransmission scheme, the first-stage SCI or single SCI may include the first bit (e.g., retransmission switching indicator) defined in Table 3. That is, the first-stage SCI or single SCI may not include the second bit (e.g., resource reuse/release indicator) defined in Table 3. Alternatively, the first-stage SCI or single SCI may include the backward indicator without the retransmission switching indicator. In this case, SCI (e.g., first-stage SCI, second-stage SCI, and/or single SCI) including the backward indicator may be interpreted as SCI indicating retransmission switching.

In the exemplary embodiment shown in FIG. 13, switching of the retransmission scheme and reuse or release of reserved resources may be indicated by the first-stage SCI and the second-stage SCI. In this case, at least one indicator among the retransmission switching indicator, resource reuse/release indicator, and backward indicator may be included in the first-stage SCI, and the remaining indicators not included in the first-stage SCI may be included in the second-stage SCI. For example, the retransmission switching indicator defined in Table 3 may be included in the first-stage SCI, and the resource reuse/release indicator defined in Table 3 may be included in the second-stage SCI. Alternatively, the retransmission switching indicator defined in Table 3 may be included in the second-stage SCI, and the resource reuse/release indicator defined in Table 3 may be included in the first-stage SCI.

The existing field(s) included in the first-stage SCI and the second-stage SCI may be used to indicate the retransmission switching indicator, the resource reuse/release indicator, and/or the backward indicator. For example, the HARQ feedback enable/disable indicator included in the second-stage SCI may be used to indicate the retransmission switching indicator. The backward indicator included in the first-stage SCI may be used to indicate the resource reuse/release indicator.

The method for indicating switching of the retransmission scheme may be performed according to the exemplary embodiment shown in FIG. 12 (e.g., switching of the retransmission scheme by second-stage SCI) or the exemplary embodiment shown in FIG. 13 (e.g., switching of the retransmission scheme by first-stage SCI). The transmitting terminal may select a method for indicating switching of the retransmission scheme (e.g., the exemplary embodiment shown in FIG. 12 or the exemplary embodiment shown in FIG. 13) and may use the selected method for indicating switching.

In the retransmission procedure according to the blind retransmission scheme, data retransmission may be performed using second-stage SCI without first-stage SCI. In this case, in order to reuse resources reserved for the blind retransmission scheme and minimize a latency of switching the retransmission scheme, switching from the blind retransmission scheme to the HARQ retransmission scheme may be indicated through the second-stage SCI. However, when there are no resources reserved for the blind retransmission scheme, the switching from the blind retransmission scheme to the HARQ retransmission scheme may be indicated through first-stage SCI. When both first-stage SCI and second-stage SCI are used in the retransmission procedure according to the blind retransmission scheme, the switching from the blind retransmission scheme to the HARQ retransmission scheme may be indicated through the first-stage SCI as in the exemplary embodiment shown in FIG. 13.

In the retransmission procedure according to the blind retransmission scheme, transmission of the first-stage SCI may be selectively performed. In this case, when switching from the blind retransmission scheme to the HARQ retransmission scheme, the exemplary embodiment shown in FIG. 12 or the exemplary embodiment shown in FIG. 13 may be used according to a reserved state of resources for the blind retransmission scheme. For example, when there is a resource reserved for the blind retransmission scheme, and the reserved resource is a transmission resource of first-stage SCI, the exemplary embodiment shown in FIG. 13 may be used. For another example, when a transmission resource of first-stage SCI is not reserved, the exemplary embodiment shown in FIG. 12 may be used. For another example, when there is no resource reserved for the blind retransmission scheme, the exemplary embodiment shown in FIG. 13 may be used.

When the transmitting terminal providing a broadcast service receives indication of switching from the blind retransmission scheme to the HARQ retransmission scheme through higher layer signaling, or when the transmitting terminal receives, from the base station, information indicating switching from the blind retransmission scheme to the HARQ retransmission scheme, the blind retransmission scheme may be switched to the HARQ retransmission scheme as in the exemplary embodiment shown in FIGS. 12 and/or 13.

In the LTE V2X communication network, a broadcast service may be provided to the receiving terminal(s), and the receiving terminal (s) may receive data based on the blind retransmission scheme. In this case, a situation may occur in which the terminal(s) need to move from the LTE V2X communication network to the NR V2X communication network. In this case, when the broadcast service is switched to a groupcast service and/or a unicast service, the transmitting terminal may indicate to the receiving terminal(s) switching from the blind retransmission scheme to the HARQ retransmission scheme, and may provide seamless communication services to the terminal(s) by using the HARQ retransmission scheme.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a transmitting terminal in a communication system, the operation method comprising:
transmitting first data to a receiving terminal based on a first retransmission scheme;
transmitting sidelink control information (SCI) to the receiving terminal, the SCI including a first indicator indicating switching of a retransmission scheme and a second indicator indicating whether to reuse a resource reserved for the first retransmission scheme; and
transmitting second data to the receiving terminal based on a second retransmission scheme initiated by the SCI,
wherein the first retransmission scheme and the second retransmission scheme are distinguished according to whether a hybrid automatic repeat request (HARQ) feedback is transmitted.

2. The operation method according to claim 1, wherein when the second indicator indicates reuse of the reserved resource, a retransmission procedure according to the second retransmission scheme is performed using the reserved resource.

3. The operation method according to claim 1, wherein when the second indicator does not indicate reuse of the reserved resource, a retransmission procedure according to the second retransmission scheme is performed using a resource allocated by the SCI.

4. The operation method according to claim 1, wherein the second indicator indicates a position of the reserved resource as well as reuse of the reserved resource.

5. The operation method according to claim 1, wherein the SCI includes first-stage SCI and second-stage SCI, the second indicator is included in the second-stage SCI when the first indicator is included in the first-stage SCI, and the second indicator is included in the first-stage SCI when the first indicator is included in the second-stage SCI.

6. The operation method according to claim 1, wherein the first indicator is represented by a HARQ feedback enable/disable indicator included in second-stage SCI.

7. The operation method according to claim 1, wherein the second indicator is represented by a backward indicator included in first-stage SCI.

8. The operation method according to claim 1, wherein when a retransmission operation of the first data is performed using second-stage SCI without first-stage SCI, a type of the SCI initiating the second retransmission scheme is second-stage SCI.

9. The operation method according to claim 1, wherein when the reserved resource does not exist or when a retransmission operation of the first data is performed using first-stage SCI and second stage-SCI, a type of the SCI initiating the second retransmission scheme is first-stage SCI.

10. The operation method according to claim 1, wherein the second retransmission scheme is a blind retransmission scheme when the first retransmission scheme is a HARQ retransmission scheme, the second retransmission scheme is the HARQ retransmission scheme when the first retransmission scheme is the blind retransmission scheme, a HARQ feedback is transmitted when the HARQ retransmission scheme is used, and a HARQ feedback is not transmitted when the blind retransmission scheme is used.

11. An operation method of a transmitting terminal in a communication system, the operation method comprising:
transmitting first data to a receiving terminal based on a first retransmission scheme;
transmitting sidelink control information (SCI) to the receiving terminal, the SCI including an indicator indicating whether to reuse a resource reserved for the first retransmission scheme; and
transmitting second data to the receiving terminal based on a second retransmission scheme initiated by the SCI,
wherein the first retransmission scheme and the second retransmission scheme are distinguished according to whether a hybrid automatic repeat request (HARQ) feedback is transmitted.

12. The operation method according to claim 11, wherein when the indicator indicates reuse of the reserved resource, a retransmission procedure according to the second retransmission scheme is performed using the reserved resource, and when the indicator does not indicate reuse of the reserved resource, a retransmission procedure according to the second retransmission scheme is performed using a resource allocated by the SCI.

13. The operation method according to claim 11, wherein the indicator indicates a position of the reserved resource as well as reuse of the reserved resource.

14. The operation method according to claim 11, wherein the SCI includes first-stage SCI and second-stage SCI, and the indicator is represented by a backward indicator included in the first-stage SCI.

15. An operation method of a receiving terminal in a communication system, the operation method comprising:
receiving first data from a transmitting terminal based on a first retransmission scheme;
receiving sidelink control information (SCI) from the transmitting terminal, the SCI including a first indicator indicating switching of a retransmission scheme and a second indicator indicating whether to reuse a resource reserved for the first retransmission scheme; and
receiving second data from the transmitting terminal based on a second retransmission scheme initiated by the SCI,
wherein the first retransmission scheme and the second retransmission scheme are distinguished according to whether a hybrid automatic repeat request (HARQ) feedback is transmitted.

16. The operation method according to claim 15, wherein when the second indicator indicates reuse of the reserved resource, the second data is received through the reserved resource, and when the second indicator does not indicate reuse of the reserved resource, the second data is received through a resource allocated by the SCI.

17. The operation method according to claim 15, wherein the SCI includes first-stage SCI and second-stage SCI, the second indicator is included in the second-stage SCI when the first indicator is included in the first-stage SCI, and the second indicator is included in the first-stage SCI when the first indicator is included in the second-stage SCI.

18. The operation method according to claim 15, wherein the first indicator is represented by a HARQ feedback enable/disable indicator included in second-stage SCI, and the second indicator is represented by a backward indicator included in first-stage SCI.

19. The operation method according to claim 15, wherein when a retransmission operation of the first data is performed using second-stage SCI without first-stage SCI, a type of the SCI initiating the second retransmission scheme is second-stage SCI.

20. The operation method according to claim 15, wherein when the reserved resource does not exist or when a retransmission operation of the first data is performed using first-stage SCI and second stage-SCI, a type of the SCI initiating the second retransmission scheme is first-stage SCI.
